# FASCICULE DE BREVET EUROPEEN

(11) **EP 3 338 944 B1**
(45) Date de publication et mention de la délivrance du brevet: **24.07.2019**
(21) Numéro de dépôt: 17206788.6
(22) Date de dépôt: 12.12.2017
(51) Int. Cl.: B23Q 9/00, B64F 5/10

(54) **MACHINE-OUTIL PRÉSENTANT UNE CONFIGURATION DE MONTAGE AVEC OUTIL EN PORTE-À-FAUX**
WERKZEUGMASCHINE, DIE EINE MONTAGEKONFIGURATION MIT AUSKRAGENDEM WERKZEUG UMFASST
MACHINE-TOOL HAVING A CANTILEVERED TOOL MOUNTING CONFIGURATION

(30) Priorité: 20.12.2016 FR 1662922
(43) Date de publication de la demande: 27.06.2018
(73) Titulaire: Airbus (S.A.S.), 31700 Blagnac (FR)
(72) Inventeur: ALBERT, Fabien, 44500 LA BAULE (FR); DAVIS, Eric, BOTHELL, WA Washington 98012 (US); HOLLIS, Kyle, MUKILTEO, WA Washington 98275 (US); NELSON, Jeff, SEATTLE, WA Washington 98107 (US); POSPISIL, Eric, BURNABY, British Columbia V5B1E6 (CA)
(74) Mandataire: Gicquel, Olivier Yves Gérard

(56) Documents cités:
- EP-A1- 2 859 990
- WO-A1-2007/019228
- WO-A1-2010/019320

## Description

### Domaine technique

La présente invention concerne une machine-outil pour la réalisation d'opérations à la surface d'une pièce, notamment de grandes dimensions, par exemple la réalisation de perçages sur un élément de fuselage d'aéronef.

Elle porte plus généralement sur le domaine des machines-outils employées pour réaliser des opérations automatisées ou semi-automatisées, typiquement des opérations d'usinage ou de montage, sur des pièces ou des structures de grandes dimensions.

### Arrière-plan technologique

La fabrication des fuselages d'avion ou d'autres structures aéronautiques telles que des ailes est réalisée de manière connue par l'assemblage de panneaux rigides, généralement métalliques, sur une structure. Pour cela, les panneaux, plans ou courbes, sont mis en position sur la structure et assemblés à celle-ci par exemple par rivetage. Cela nécessite de pouvoir usiner l'ensemble une fois les panneaux en position, typiquement afin de réaliser les perçages nécessaires au rivetage.

Ces opérations sont réalisables par un opérateur. Le développement de robots de grandes dimensions susceptibles de réaliser les perçages sur la totalité d'un fuselage est onéreux.

Afin de réaliser ces perçages ou d'autres opérations d'usinage simples sur des ensembles de grandes dimensions, de manière rapide et avec précision, des dispositifs ont néanmoins été développés afin d'automatiser en partie ces opérations.

Par exemple, on connait une machine-outil comportant deux rails flexibles parallèles fixés sur la structure à usiner. La fixation des rails sur la structure est réalisée à l'aide de ventouses. Un moyen d'usinage, typiquement une perceuse, se déplace entre les deux rails, le long d'un module transversal.

Un tel dispositif est cependant compliqué à mettre en oeuvre, en ce qu'il comporte deux rails devant être parfaitement parallèles. En outre, par construction, la largeur entre les deux rails, et la surface pouvant être atteinte par l'outil d'usinage, sont limités. Enfin, un tel dispositif n'est pas adapté à une surface présentant une double courbure importante, du fait de la difficulté à positionner deux rails parallèles sur une telle surface. Une double courbure prononcée est présente dans certaines zones de structures aéronautiques et notamment de certains fuselages.

Le document FR3011494 présente une machine-outil permettant la réalisation d'opérations sur une pièce, comportant un rail unique et une unité comportant des moyens de maintien sur la pièce, ainsi qu'un bras transversal portant un outil, bras transversal dont les extrémités sont liées respectivement au rail et à l'unité. Une telle machine-outil est simple à mettre en oeuvre car elle nécessite la mise en position d'un seul rail. Elle est adaptée à la réalisation d'opérations sur une pièce présentant une surface à double courbure. Néanmoins, cette machine-outil n'est pas adaptée à des configurations particulières de pièces, ou à la réalisation d'opérations dans certaines zones dans lesquelles la mise en oeuvre de l'unité comportant des moyens de maintien n'est pas possible.

WO2007/019228A1 décrit une machine-outil selon le préambule de la revendication. 1.

### Résumé de l'invention

La présente invention a pour but de proposer une machine-outil optimisée permettant de résoudre au moins l'un des inconvénients précités.

A cette fin, l'invention porte donc sur une machine-outil telle que définie par la revendication 1.

Le bras transversal comporte des moyens de fixation au module de liaison positionnés entre les deux extrémités du bras transversal,
de sorte que la machine-outil présente une configuration de montage dans laquelle l'unité de maintien et l'outil sont respectivement positionnés de part et d'autre du rail longitudinal, de sorte que l'outil est monté en porte-à-faux vis-à-vis du rail longitudinal.

La configuration de montage dans laquelle une part du bras transversal et l'outil sont en porte-à-faux vis-à-vis du rail longitudinal offre une grande polyvalence à la machine-outil, en ce qu'elle permet la réalisation d'opérations dans des zones notamment de fortes courbures, d'accès difficiles, ou inadaptées à la fixation de la ou des ventouses de l'unité de maintien.

Dans une telle machine-outil en position de montage dans laquelle l'outil est en porte-à-faux, la longueur en porte-à-faux du bras transversal peut correspondre à 50% à 75% de sa longueur entre ses deux extrémités.

Le bras transversal comporte en outre des moyens de fixation au module de liaison positionnés à l'extrémité du bras transversal opposée à celle où est disposée l'unité de maintien, de sorte que la machine-outil présente une configuration de montage dans laquelle l'outil est porté par le bras transversal entre le rail longitudinal et l'unité de maintien.

L'unité de maintien peut comporter un système de déplacement adapté à ramper sur la pièce, parallèlement au rail longitudinal.

La machine-outil peut en outre comporter un dispositif de commande, arrangé de sorte à synchroniser le mouvement de l'unité de maintien au mouvement du module de liaison le long du rail longitudinal.

Le bras transversal est formé d'un cadre rectangulaire, comportant deux montants transversaux et deux montants longitudinaux.

La liaison entre l'outil et le bras transversal peut comporter un pivot permettant le réglage de l'orientation de l'outil selon un axe longitudinal, sensiblement parallèle au rail longitudinal.

Le réglage de l'orientation de l'outil selon un axe longitudinal peut être réalisé sur un débattement compris entre 20° et 40° d'angle, et de préférence sur un débattement de l'ordre de 30° d'angle.

La liaison entre l'outil et le bras transversal peut comporter un pivot permettant le réglage de l'orientation de l'outil selon un axe transversal, sensiblement parallèle au bras transversal.

Le réglage de l'orientation de l'outil selon un axe transversal peut être réalisé sur un débattement compris entre 5° et 20° d'angle et de préférence sur un débattement de l'ordre de 10° d'angle.

La liaison entre l'outil et le bras transversal peut comporter une glissière permettant le réglage de l'outil selon un axe sensiblement orthogonal aux directions longitudinale et transversale.

L'outil peut comporter un nez monté en pivot et des moyens de mesure et de correction de son orthogonalité vis-à-vis de la pièce.

La machine-outil peut en outre comporter un système optique, comportant une caméra et permettant la visualisation et l'analyse d'une zone en regard de l'outil.

La machine-outil peut comporter un dispositif choisi parmi : un capteur d'effort sur le bras transversal, un capteur d'effort exercé sur le rail longitudinal, un capteur angulaire configuré pour déterminer l'angle entre le bras transversal et le rail longitudinal, au moins deux capteurs linéaires positionnés sur le module de liaison, au moins deux capteurs linéaires positionnés sur le bras transversal.

L'unité de maintien et/ou le module de liaison peut comporter en outre un dispositif de détection de présence orienté selon une direction de déplacement et configuré pour détecter d'un obstacle lors d'un tel déplacement. Le dispositif de détection de présence est par exemple un dispositif à laser.

La machine-outil peut comporter plusieurs contrôleurs, chaque contrôleur étant dédié au pilotage respectif des fonctions d'un élément de la machine-outil auquel ledit contrôleur est lié.

La machine-outil peut par exemple comporter :
- un premier contrôleur lié au bras transversal ;
- un deuxième contrôleur lié au support d'outil ;
- un troisième contrôleur lié à l'outil.

### Brève description des figures

D'autres particularités et avantages de l'invention apparaîtront encore dans la description ci-après.

Aux dessins annexés, donnés à titre d'exemples non limitatifs :
- la figure 1 présente selon une vue schématique en trois dimensions une machine-outil selon un mode de réalisation de l'invention, dans une première configuration de montage ;
- la figure 2 présente, selon une vue de profil, la machine-outil de la figure 1 ;
- la figure 3 présente selon une vue schématique en trois dimensions une machine-outil selon un mode de réalisation de l'invention, dans une deuxième configuration de montage ;
- la figure 4 présente schématiquement selon une vue éclatée les principaux éléments constitutifs de la machine-outil des figures 1 à 3 ;
- la figure 5 présente selon une vue de profil une machine-outil dans la configuration de montage de la figure 3, installée sur une surface fortement courbée pour y réaliser des opérations ;
- les figures 6a, 6b et 6c illustrent une première capacité de réglage en rotation de la position de l'outil de la machine-outil des figures 1 à 5 ;
- les figures 7a, 7b et 7c illustrent une deuxième capacité de réglage en rotation de la position de l'outil de la machine-outil des figures 1 à 5 ;
- les figures 8a et 8b illustrent un système optique pouvant être mis en oeuvre dans un mode de réalisation de l'invention ;
- la figure 9 représente schématiquement selon une vue en coupe le nez d'un outil 4 pouvant être employé dans l'invention ;
- la figure 10 représente schématiquement un exemple d'architecture distribuée pour le contrôle d'une machine-outil selon un mode de réalisation de l'invention.

### Description détaillée de l'invention

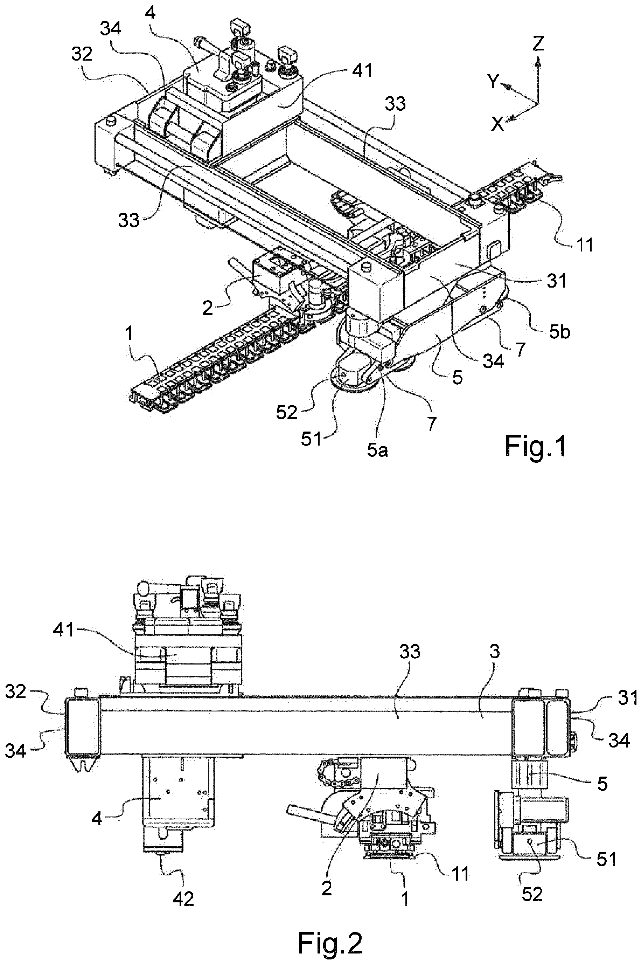

Une machine-outil selon l'invention comporte un rail longitudinal 1, comme représenté en figure 1. Le rail longitudinal 1 comporte, dans un mode de réalisation de l'invention, des ventouses de fixation 11, permettant d'en assurer la fixation sur une pièce P sur laquelle des opérations par exemple d'usinage sont à mener. Ici, le rail longitudinal 1 est flexible et peut ainsi suivre la courbure de la pièce P. Un module de liaison 2 est monté sur le rail longitudinal 1 et peut se déplacer en translation sur ce dernier. Le module de liaison 2 assure la liaison entre le rail longitudinal 1 et un bras transversal 3. Le module de liaison 2 peut être équipé d'un ensemble de roulements serrés sur le rail. De plus, le module 2 est avantageusement équipé d'au moins un moteur entraînant sa translation sur le rail longitudinal 1.

Un bras transversal 3 est fixé au module de liaison 2. A cette fin, le bras transversal comporte des moyens de fixation au module de liaison 2.

Le bras transversal 3 peut avoir une forme générale de poutre. Dans l'exemple de mode de réalisation illustré, le bras transversal se présente sous la forme d'un cadre sensiblement rectangulaire. Le bras transversal comporte deux extrémités, à savoir une première extrémité 31 et une seconde extrémité 32. Lorsque le bras est formé d'un cadre rectangulaire, il comporte deux montants transversaux 33 et deux montants longitudinaux 34.

Le bras transversal 3 est, et reste, sensiblement orthogonal au rail longitudinal 1. Le bras transversal 3 peut se déplacer en translation le long du rail longitudinal 1, via la translation du module de liaison 2. Dans l'exemple ici représenté, cette translation est directement liée à la translation du module de liaison 2 le long du rail longitudinal 1.

Un outil 4, typiquement un outil d'usinage, est lié au bras transversal 3. L'outil 4 peut être en pratique monté dans un support d'outil 41, tel qu'une plateforme multifonctionnelle, qui se connecte au bras transversal 3 via une interface, ce module contenant au moins un outil de travail (qui peut être par exemple un outil d'usinage, un moyen de mesure, un outil de dépôt d'un revêtement). Le support d'outil 41 peut également comporter d'autres fonctions, comme la gestion du positionnement pour connaitre la position de l'outil de travail, ou codeurs linéaires ou rotatifs en amont de l'outil final.

Deux systèmes de gestion de la position sont conjointement utilisés. En effet, un premier système a en charge de gérer la position du module de liaison 2 sur le rail longitudinal 1.

Un deuxième système gère le positionnement de l'outil 4 sur le bras transversal, c'est-à-dire sur la surface de la pièce P sur laquelle des opérations sont réalisées. Ce système peut employer des capteurs inertiels.

Un troisième système gère l'orientation de l'outil 4 sur la surface de travail, c'est-à-dire sur la surface de la pièce P sur laquelle des opérations sont réalisées.

Les premier, deuxième et troisième systèmes peuvent mettre en oeuvre un ensemble de capteurs de positions, de type capteurs linéaires et/ou rotatifs. Selon une variante, le troisième système peut employer des capteurs inertiels.

Le support d'outil 41 contenant l'outil de travail sert ainsi à assurer la liaison mécanique de l'outil 4 au bras transversal 3, à apporter les énergies nécessaires au fonctionnement de l'outil de travail, et à en assurer la fonctionnalité grâce à divers périphériques tels que des vérins, des capteurs, etc. Le support d'outil 41 peut assurer également la gestion de l'orthogonalité du bras transversal 3 par un système composé de capteurs de position type PSD (pour Position Sensitive Device). Plus précisément, le système PSD est un ensemble de capteurs configurés pour mesurer la torsion qui s'exerce sur le bras 3 lorsque le déplacement module 5 n'est pas synchronisé avec celui du module 2. Ces capteurs peuvent être des capteurs de force configurés pour mesurer une torsion mais aussi des capteurs de positionnement installés soit au niveau du cadre 3 entre le module 5 et le module 2, soit au niveau des points de fixation du module 2.

La mesure peut être fondée sur le fait que quand l'orthogonalité du cadre 3 est "parfaite" les différents capteurs sont tous alignés, tandis que lorsque l'unité de maintien 5 est décalée par rapport au module 2, les capteurs ne sont plus alignés. Ainsi, le système PSD mesure la position de l'unité de maintien 5 par rapport au module 2.

Le support d'outil 41 (et donc in fine l'outil 4) est, dans l'exemple ici représenté, conformé pour se déplacer en translation le long du bras transversal 3.Le support d'outil 41 est donc en liaison glissière avec le bras transversal 3.

En particulier, dans l'exemple de mode de réalisation représenté, l'outil 4 est supporté par un support d'outil 41 positionné à l'intérieur du cadre qui forme le bras transversal 3. Le support d'outil 41 est mobile en translation entre les montants transversaux 33. Le support d'outil est ainsi monté en glissière sur chacun des montants transversaux 33. La translation du support d'outil 41 le long du bras transversal 3 peut être motorisée.

L'outil 4 peut notamment être une perceuse, ou un outil de perçage appelé « unité de perçage automatique ». Il peut également s'agir à titre d'exemples et de manière non exhaustive d'un outil de découpage, de meulage, de contrôle dimensionnel, de contrôle non destructif par exemple à ultra-sons, de détection de trous borgnes, d'application de mastic, d'application de colle, d'application de peinture.

Les moteurs entraînant le mouvement du module 2 le long du rail longitudinal et/ou celui de l'outil 4 (via le mouvement du support d'outil 41) le long du bras transversal 3 peuvent être du type « pas à pas ». Ils sont avantageusement associés à un système de commande électronique (non représenté) permettant d'en assurer le contrôle en position.

Ainsi, la position de l'outil peut être très précisément contrôlée dans un repère orthogonal ayant un axe parallèle au rail longitudinal (position dite en « x ») et un axe parallèle au bras transversal (position dite en « y »). « x » et « y » font référence au repère orthogonal x,y,z représenté sur la figure 1.

Tout autre dispositif par ailleurs connu dans l'état de la technique permettant de piloter et contrôler la position de l'outil selon ces deux axes peut également être employé.

La machine-outil comporte une unité de maintien 5. L'unité de maintien 5 est fixée à une extrémité du bras transversal 3, en l'occurrence à la première extrémité 31 du bras transversal 3.

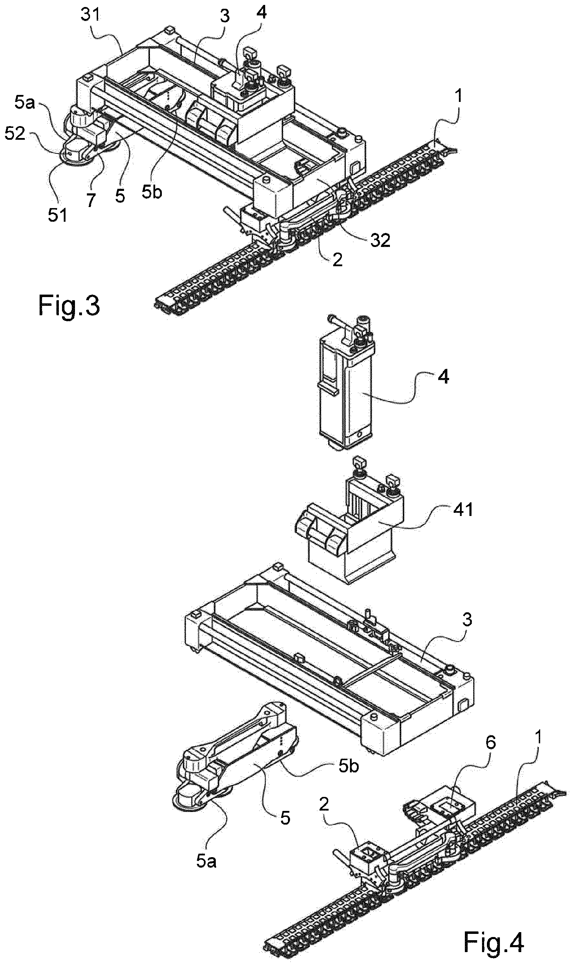

La machine-outil peut en particulier être montée selon deux configurations représentées respectivement à la figure 1 et à la figure 3. Dans une première configuration montrée à la figure 1, l'outil 4 et son support d'outil 41 sont montés en porte à faux vis-à-vis du rail longitudinal 1. Dans cette configuration de montage, l'unité de maintien 5 est positionnée d'un côté du rail longitudinal 1, tandis que l'outil 4 est positionné de l'autre côté du rail longitudinal. Ainsi, la partie du bras transversal 3 supportant l'outil 4, et l'outil 4 lui-même, sont montés en porte-à-faux par rapport au rail longitudinal 1, tel que cela est bien visible notamment à la figure 2.

Dans la seconde configuration, montrée à la figure 3, l'outil 4 et son support 41 sont montés en appui entre le rail longitudinal 1 et l'unité de maintien 5. Dans cette configuration plus classique, l'outil 4 et son support d'outil 41 sont positionnés entre le rail longitudinal 1 et l'unité de maintien 5.

Pour le montage dans l'une ou l'autre des configurations de la machine-outil, le bras transversal 3 est pourvu de différents moyens de fixation permettant sa fixation au module de liaison 2.

Ainsi le bras transversal 3 comporte des moyens de fixation au module de liaison 2 positionnés entre les deux extrémités 31,32 du bras transversal. Ces moyens de fixation permettent un montage des éléments constitutifs de la machine-outil (représentés à la figure 3) selon la première configuration de montage représentée aux figures 1 et 2.

Dans cette configuration, dans une application aéronautique, le bras transversal peut présenter une longueur en porte-à-faux autorisant des usinages sur 550mm environ (selon la direction y).

La longueur en porte-à-faux du bras 3 peut notamment correspondre à 50% à 75% de sa longueur totale, mesurée entre la première extrémité 31 et la seconde extrémité 32.

La figure 3 illustre la seconde configuration de montage permise par l'exemple de mode de réalisation de l'invention représenté. Dans cette configuration, l'unité de maintien 5 est fixée à une extrémité du bras transversal 3 (en l'occurrence la première extrémité 31) tandis que le module de liaison 2 est fixé à l'autre extrémité du bras transversal 3 (c'est-à-dire en l'occurrence à la deuxième extrémité 32). Le bras transversal 3, et donc l'outil 4 qu'il porte, sont ainsi en appui tant sur le rail longitudinal (via le module de liaison 2) que sur l'unité de maintien 5. Dans cette configuration de montage, la machine-outil présente une configuration analogue à celle de la machine-outil décrite dans le document FR3011494.

De manière générale l'unité de maintien 5 peut comporter une ou plusieurs unités de maintien élémentaires. L'unité de maintien comporte une (ou plusieurs) ventouse 51, qui permet le maintien en position de l'unité de maintien 5 vis-à-vis d'une pièce P sur laquelle la machine-outil effectue des opérations. L'unité de maintien 5 est avantageusement motorisée, et comporte plus particulièrement un système de déplacement pour ramper sur la pièce P parallèlement au rail longitudinal.

L'unité de maintien peut comporter un dispositif de détection de présence. A titre d'exemple, le dispositif de détection de présence comporte un laser 52. Le dispositif de détection de présence permet de détecter un obstacle dans une direction de déplacement de l'unité de maintien 5. Lorsqu'un obstacle est détecté à proximité (par coupure du faisceau laser, par exemple), le déplacement de l'unité de maintien 5, et corolairement du module de liaison 2, est stoppé.

De manière analogue, le module de liaison 2 peut comporter un dispositif de détection de présence, comportant par exemple un laser. Ce dispositif détecte si un obstacle est présent à proximité sur le rail longitudinal 1. Lorsqu'un obstacle est détecté à proximité (par coupure du faisceau laser, par exemple), le déplacement du module de liaison 2 et corolairement de l'unité de maintien 5 est immédiatement stoppé.

Dans l'exemple ici représenté, l'unité de maintien 5 comprend deux unités élémentaires 5a, 5b qui sont fixées au bras transversal 3 chacune par un élément de liaison 7. Chaque unité élémentaire 5a, 5b comporte au moins une ventouse 51, alimentée par un dispositif de génération de vide.

La (ou les) ventouse 51 permet le maintien en position de l'unité de maintien 5 vis-à-vis de la pièce P, lors d'une opération sur la pièce P pouvant générer des efforts dans le bras transversal 3.

Chaque unité élémentaire 5a, 5b est articulée par rapport au bras transversal selon un pivot d'axe sensiblement parallèle audit bras transversal (c'est-à-dire selon la direction y). Cela permet aux unités élémentaires 5a, 5b d'être parfaitement en contact avec la pièce P, même si ladite pièce P présente un rayon de courbure prononcé dans la direction du rail longitudinal

En outre, comme cela est montré à la figure 4, l'unité de maintien 5 est avantageusement articulée en pivot vis-à-vis du bras transversal selon un axe parallèle au rail longitudinal (c'est-à-dire selon la direction x). Cela permet à l'unité de maintien 5 d'être parfaitement en contact avec la pièce P, même si ladite pièce P présente un rayon de courbure prononcé dans la direction du bras transversal, comme représenté à la figure 4.

De même, le module de liaison 2 est avantageusement articulé en pivot vis-à-vis du bras transversal selon un axe parallèle au rail longitudinal (c'est-à-dire selon la direction x). Cela permet d'adapter la liaison entre le rail longitudinal 1 et le bras transversal 3, même si ladite pièce P présente un rayon de courbure prononcé dans la direction du bras transversal, comme représenté à la figure 4.

Bien qu'elles soient représentées à la figure 4 dans la configuration de montage optionnelle dans laquelle le bras transversal 3 ne présente pas de partie en porte-à-faux, toutes les caractéristiques précitées permettant l'adaptation de la machine-outil à une surface courbe ou présentant deux rayons de courbure sont applicables à la machine-outil dans sa configuration de montage dans laquelle l'unité de maintien 5 et l'outil 4 sont situés de part et d'autre du rail longitudinal 1.

Le mouvement de l'unité de maintien 5 est avantageusement contrôlé par un dispositif de commande 6. Le dispositif de commande 6 peut être lié à l'unité de maintien 5. Le dispositif de commande 6 peut, selon diverses variantes, présenter diverses localisations et caractéristiques. Le dispositif de commande 6, en alternative à une position liée à l'unité de maintien 5, peut être porté par le module de liaison 2, ou par tout autre élément de la machine-outil. Il peut être extérieur à la machine-outil. Dans le cadre d'une architecture de contrôle dite centralisée (ou en partie centralisée), le dispositif de commande 6 peut également employer les mêmes moyens physiques (calculateurs, etc.) que les moyens commandant le déplacement du module 2 sur le rail longitudinal 1. Enfin, les données de commandes issues du dispositif de commande 6 peuvent être transmises à l'unité de maintien 5 par des moyens filaires ou sans fil.

Le dispositif de commande 6 vise à synchroniser le mouvement de l'unité de maintien 5 à celui du module 2 le long du rail longitudinal 1.

Sur une surface plane, le mouvement de l'unité de maintien 5 doit être identique à tout instant à celui du module de liaison 2 le long du rail longitudinal 1, afin d'assurer un déplacement identique et simultané de ces éléments, ce qui maintien à tout instant l'orthogonalité du bras transversal 3 vis-à-vis du rail longitudinal 1. A contrario, lors d'une utilisation de la machine-outil sur une surface présentant une double courbure, par exemple à l'avant du fuselage d'un aéronef, la vitesse de l'unité de maintien 5 doit être différente de la vitesse du module 2 afin d'assurer que l'unité de maintien 5 et le module 2 se déplacent de manière synchronisée (et maintenir à tout instant l'orthogonalité du bras transversal 3 vis-à-vis du rail longitudinal 1), bien que les distances à parcourir respectivement par l'unité de maintien 5 et le module de liaison 2 soient différentes. Le dispositif de commande 6 permet une telle gestion des déplacements de l'unité de maintien 5 et du module de liaison 2.

La machine-outil peut également être dotée de moyens de détermination des efforts générés par le bras transversal au niveau de sa liaison avec le rail longitudinal en liaison avec le dispositif de commande 6. Il peut typiquement s'agir de capteurs ou de jauges de contraintes, permettant la détermination du couple dans la liaison entre le rail longitudinal 1 et le bras transversal 3.

Les moyens de détermination des efforts sont fonctionnellement liés au dispositif de commande 6. Le dispositif de commande 6 reçoit donc les mesures des capteurs, et, en fonction de ces mesures, commande un mouvement de l'unité de maintien 5, par sa motorisation, de sorte à minimiser les efforts générés par le bras transversal au niveau de sa liaison avec le rail longitudinal.

D'une manière générale, la machine-outil peut comporter un ensemble de moyens de contrôle géométriques (non illustrés) permettant d'identifier les déformations (flexions, torsions) susceptibles d'affecter la précision du positionnement de l'outil 4, et de corriger ce positionnement via une boucle de correction.

En particulier, le contrôle du déplacement de l'unité de maintien 5, et donc de la première extrémité 31 du bras transversal 3, peut mettre en oeuvre divers dispositifs alternatifs ou complémentaires. Par exemple, un capteur de tour peut être positionné sur toute pièce en rotation d'un système de déplacement de l'unité de maintien 5: roulette, poulie de chenille, pignon, arbre de moteur, etc. Un capteur d'effort peut être disposé sur le bras transversal 3 conjointement à un autre capteur d'effort positionné sur le rail longitudinal, permettant de déterminer l'écart d'effort mesuré entre ces deux capteurs. Un capteur de position angulaire peut être positionné au niveau de la liaison entre le bras transversal 3 et le rail longitudinal 1, afin de mesurer l'angle formé entre le rail longitudinal 1 et le bras transversal 3, et le cas échéant l'écart d'angle par rapport aux 90° théoriques entre le rail longitudinal 1 et le bras transversal 3.

De manière générale, le ou les capteurs mis en oeuvre sont liés à un calculateur permettant de comparer une ou plusieurs valeurs mesurées à un seuil prédéfini, afin d'appliquer le cas échéant une correction à la commande du système de déplacement de l'unité de maintien 5 ou du module de liaison 2.

Dans tous les modes de réalisation d'unité de maintien 5, il peut être avantageux de faire varier la force générée par les ventouses. Ainsi, il peut être avantageux de faire varier la dépression dans les ventouses. Par exemple, lorsque la pièce sur laquelle des opérations sont réalisées est assimilable à un cylindre horizontal, comme peut l'être un fuselage d'avion, la force de gravité s'exerçant sur l'unité de maintien 5 tend à l'écarter de la pièce lorsqu'une opération est réalisée en partie basse de cette dernière, tandis qu'elle tend à la plaquer sur la pièce lorsqu'une opération est réalisée en partie haute de cette dernière. Typiquement, l'unité de maintien 5 peut comporter un accéléromètre et/ou des capteurs inertiels configurés pour permettre la détermination de sa position et/ou de son orientation afin de garantir un comportement homogène de la machine-outil quelle que soit son orientation.

L'exemple de mode de réalisation de la machine-outil ici représentée comporte un outil 4 lié au bras transversal 3 via un support d'outil 41 conformé pour se déplacer en translation le long du bras transversal 3. L'outil peut également, selon diverses variantes de l'invention, être réglé voire piloté en orientation selon trois axes de rotation orthogonaux, ou selon l'un, ou deux, de ces trois axes.

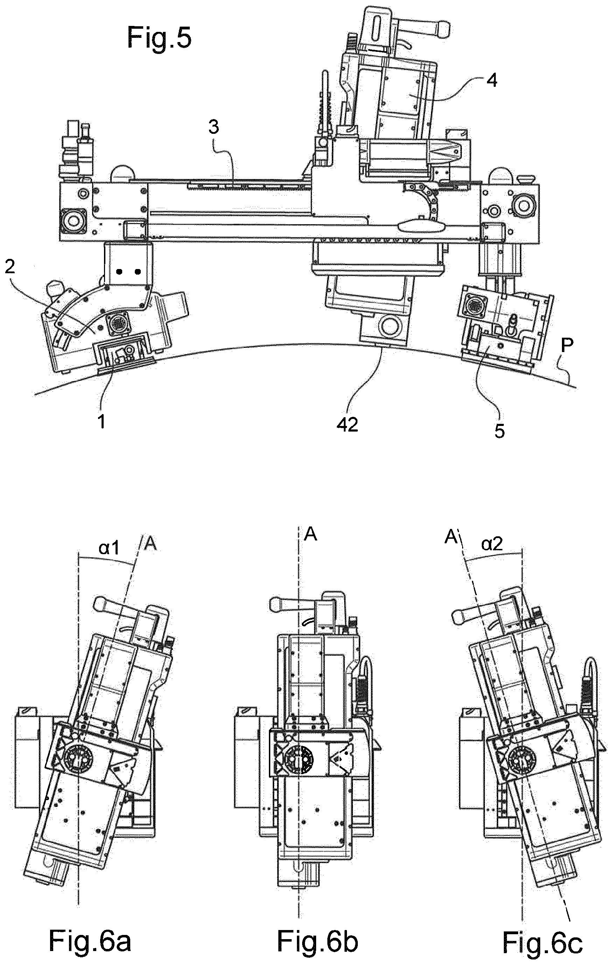

Les figures 6a à 6c illustrent trois positions de réglage en orientation de l'outil 4 selon un axe de rotation sensiblement longitudinal (i.e. selon la direction x). En l'occurrence, les positions représentées respectivement aux figures 6a et 6c correspondent à deux positions de réglage extrême, « en butée », de l'outil 4, autour d'une position médiane représentée à la figure 6b. Dans la position médiane représentée à la figure 6b, l'outil présente un axe principal A (par exemple correspondant à la direction de perçage, si l'outil 4 est ou comporte une perceuse) orienté selon l'axe z. Dans la position extrême de la figure 6a, l'outil est incliné (c'est-à-dire que son axe principal A est incliné) dans une première direction d'un angle α1 de 15° par rapport à la direction z (ou, en d'autres termes, par rapport à la position médiane de la figure 6b). Dans la position extrême de la figure 6c, l'outil est incliné (c'est-à-dire que son axe principal A est incliné) dans une deuxième direction opposée à la première direction d'un angle α2 de 15° par rapport à la direction z (ou, en d'autres termes, par rapport à la position médiane de la figure 6b). Ainsi, dans l'exemple représenté, l'outil 4 présente un débattement de réglage de plus ou moins 15° par rapport à la position médiane, soit un débattement de 30°. D'autres valeurs sont envisageables, et offrent plus ou moins de polyvalence à l'outil. Par exemple, il peut être réglable sur un débattement compris entre 20° et 40°, centré ou non sur la position médiane.

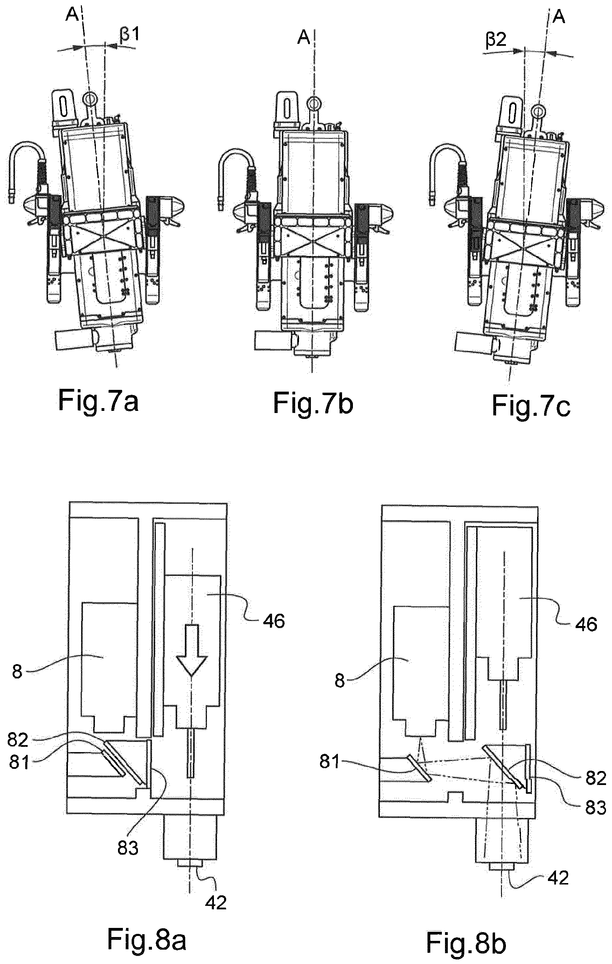

Les figures 7a à 7c illustrent trois positions de réglage en orientation de l'outil 4 selon un axe de rotation sensiblement transversal (i.e. selon la direction y). En l'occurrence, les positions représentées respectivement aux figures 7a et 7c correspondent à deux positions de réglage extrême, « en butée », de l'outil 4, autour d'une position médiane représentée à la figure 7b. Dans la position médiane représentée à la figure 7b, l'outil présente un axe principal A (par exemple correspondant à la direction de perçage, si l'outil 4 est ou comporte une perceuse) orienté selon l'axe z. Dans la position extrême de la figure 7a, l'outil est incliné (c'est-à-dire que son axe principal A est incliné) dans une première direction d'un angle β1 de 5° par rapport à la direction z (ou, en d'autres termes, par rapport à la position médiane de la figure 7b). Dans la position extrême de la figure 7c, l'outil est incliné (c'est-à-dire que son axe principal A est incliné) dans une deuxième direction opposée à la première direction d'un angle β2 de 5° par rapport à la direction z (ou, en d'autres termes, par rapport à la position médiane de la figure 7b). Ainsi, dans l'exemple représenté, l'outil 4 présente un débattement de réglage de plus ou moins 5° par rapport à la position médiane, soit un débattement de 10°. D'autres valeurs sont envisageables, et offrent plus ou moins de polyvalence à l'outil. Par exemple, il peut être réglable sur un débattement compris entre 5° et 20°, centré ou non sur la position médiane.

La position de l'outil peut également être réglée selon le troisième axe, c'est-à-dire en translation selon la direction z. Pour ce faire, l'outil ou son support comporte une liaison glissière selon cet axe.

Les trois réglages ci-dessus évoqués permettent le cas échéant un positionnement de l'outil orthogonal à la surface de la pièce P pouvant présenter une courbure complexe, ainsi que le rapprochement d'un nez 42 de l'outil 4 à proximité ou au contact de la surface de la pièce P, comme illustré à la figure 4. Le nez 42 peut notamment être pivotant (monté en rotule) ce qui permet de contrôler sa normalité (c'est-à-dire le caractère orthogonal) vis-à-vis de la pièce P.

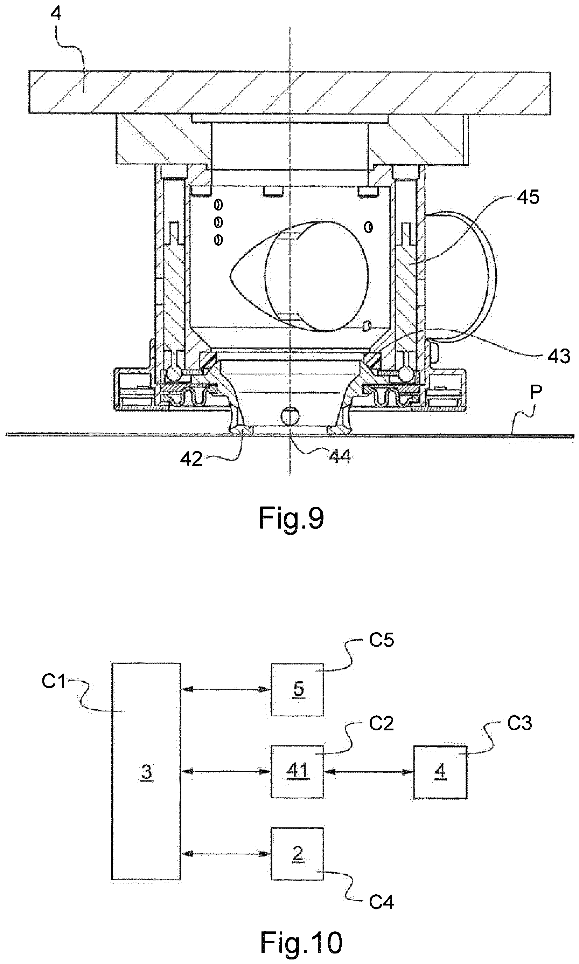

Plus particulièrement, un système contrôle (c'est à dire mesure et corrige) l'orthogonalité de l'outil 4 par rapport à sa surface de travail (surface de la pièce P). Le système, illustré à la figure 9 est composé d'un ensemble monté en rotule pivotant au niveau de la surface de rotule 43 autour du point de pivotement 44. L'ensemble est disposé au niveau du nez 42 et couplé à un ensemble de capteurs de position 45. Au contact du nez de l'outil sur la surface, le différentiel de position est mesuré et l'orientation de l'outil par rapport à la surface de travail est déterminée. L'orientation de l'outil peut ainsi être réglée par un pilotage en boucle entre la mesure de la position et le pilotage des mouvements de l'outil (jusqu'à ce que le différentiel entre la mesure des capteurs de position 45 soit nul, ce qui correspond à une parfaite orthogonalité de l'outil 4 vis-à-vis de la surface de la pièce P).

Les figures 8a et 8b illustrent un système optique pouvant être mis en oeuvre dans un mode de réalisation de l'invention. Le système optique permet la visualisation et l'analyse d'une zone en regard de l'outil dans laquelle une opération doit être réalisée. Cela peut permettre un positionnement très précis de l'outil, par exemple vis-à-vis d'un repère de perçage, ou encore pour la réalisation précise d'un motif de perçage prédéfini.

Le système optique comporte une caméra 8, un premier miroir 81 et un second miroir 82. Le second miroir 82 est mobile, entre une position dans laquelle le système optique est inactif (figure 8a) et une position dans laquelle le système optique est en fonction (figure 8b). Dans le mode de réalisation représenté, l'outil 4 ne peut être employé que lorsque le système optique est inactif, et réciproquement le système optique ne peut être actif que si l'outil n'est pas employé. En effet, en position active de la figure 8b, le deuxième miroir 82 est positionné dans d'usinage, en l'occurrence une perceuse 46, qui est en position rétractée (remontée dans le module d'outil). La caméra 8 présente, dans l'exemple représenté, un axe de vision parallèle à l'axe de perçage de la perceuse 46. Dans la position active du système optique, le premier miroir et le deuxième miroir sont positionnés de sorte à former un périscope, de sorte à offrir à la caméra un axe de vision confondu avec l'axe de la perceuse 46, permettant une visualisation au travers du nez 42.

Dans la position inactive représentée à la figure 8a, le deuxième miroir est rétracté en dehors de l'axe de la perceuse 46 et du nez 42. Une cloison 83 isole le système optique de l'outil 4 et des éventuels copeaux ou poussières pouvant remonter dans l'outil 4 lors de l'usinage.

Comme indiqué ci-avant, le pilotage de la machine-outil met en oeuvre de nombreux systèmes de pilotage ou de contrôle : du positionnement de la machine-outil et en particulier du module de liaison 2 sur le rail longitudinal, de l'orthogonalité du bras transversal 3 vis-à-vis du rail longitudinal 1, du positionnement du support d'outil 41 sur le bras transversal 3, du positionnement et de l'orientation de l'outil 4 vis-à-vis de la pièce P, de l'outil 4 lui-même et d'autres fonctions (système optique de visualisation, laser anticollision, etc...).

Toutes ces fonctions peuvent être pilotées par un ou plusieurs calculateurs ou contrôleurs (tel que décrit précédemment pour une architecture centralisée mettant en oeuvre le dispositif de commande 6). Avantageusement, une architecture de commande distribuée peut également être employée. La figure 10 illustre cet aspect. Ainsi, la figure 10 illustre un exemple d'architecture de contrôle distribuée pouvant être mise en oeuvre dans l'invention.

Dans l'exemple représenté, chaque élément contrôle les fonctions qui lui sont assignées via un ou plusieurs calculateurs dédiés. Chaque élément est en outre en interface logique (c'est-à-dire qu'il peut échanger des informations) avec les autres éléments pertinents pour la fonction considérée ou ayant besoin d'informations sur cette fonction pour le pilotage d'autres fonctions. Par exemple, la position de l'outil sur la pièce dépend (notamment) de la position du module de liaison 2 sur le rail longitudinal 1 et du support d'outil 41 sur le bras transversal 3, de sorte que des informations à destination de l'outil peuvent être adressé par un calculateur pilotant l'outil et par des calculateur contrôlant respectivement le module de liaison 2 et le support d'outil 41.

Dans l'exemple représenté, le bras transversal 3 comporte un premier contrôleur C1. Le premier contrôleur C1 comporte les fonctions d'alimentation électrique des autres contrôleurs décrits ci-après. Le premier contrôleur C1 réalise la mesure de l'orthogonalité du bras transversal 3, et son contrôle via la génération de commandes à destination du module de liaison 2 et/ou de l'unité de maintien 5. Il peut généralement jouer un rôle de centralisateur et de re-distributeur des données en provenance et à destination des autres modules de contrôle.

Un deuxième contrôleur C2 est porté par le support d'outil 41. Le deuxième contrôleur C2 détermine et pilote la position du porte outil 41 le long du bras transversal 3 ainsi que l'orientation de l'outil 4 par rapport à la surface de travail de la pièce P.

Un troisième contrôleur C3 est lié à l'outil 4. Le troisième contrôleur C3 détermine et pilote la position et l'orientation de l'outil 4. Il peut contrôler également d'autres fonctions en relation avec l'outil, par exemple la mise en oeuvre de la caméra 8.

Un quatrième contrôleur C4 est porté par le module de liaison 2. Le quatrième contrôleur C4 est en charge de contrôler (déterminer et piloter) le mouvement du module de liaison 2 le long du rail longitudinal 1. Il peut le cas échéant acquérir les données en provenance d'un dispositif de détection de présence porté par le module de liaison 2 pour éviter toute collision avec un obstacle sur le rail longitudinal 1.

Un cinquième contrôleur C5 est porté par l'unité de maintien 5. Le cinquième contrôleur C5 contrôle le mouvement de l'unité de maintien 5 sur la surface de la pièce P. Il contrôle également, le cas échéant, la répartition et le niveau de dépression dans les ventouses 51 du moyen de maintien 5.

Bien évidemment, la répartition détaillée ci-dessus n'est qu'un exemple possible de réalisation. De nombreuses autres répartitions des fonctions entre contrôleurs peuvent être envisagées, de même que certains contrôleurs peuvent être communs à plusieurs éléments de la machine-outil. Par exemple, le premier contrôleur C1 peut être configuré pour réaliser les fonctions associées au quatrième contrôleur C4 et au cinquième contrôleur C5.

Une architecture de contrôle distribuée est particulièrement pertinente dans une approche modulaire de la machine-outil telle que celle présentée à la figure 4. En effet, en répartissant les fonctions dans plusieurs contrôleurs associés respectivement à chaque module ou groupe de modules, la maintenance de la machine-outil est facilitée (on peut démonter et remplacer un module ou un contrôleur), la machine-outil peut évoluer techniquement ou être mise à jour plus facilement (par le remplacement d'un seul module pour l'amélioration des fonctions de ce module ou l'ajout de nouvelles fonctions).Bien évidemment, d'autres modes de réalisation ou variantes de la machine-outil peuvent être envisagés sans sortir du cadre de l'invention.

En particulier, d'autres moyens de fixation du rail longitudinal 1 sur la pièce P peuvent être employés, par exemple des moyens magnétiques.

Dans une autre variante de l'invention, le rail longitudinal 1 ne comporte pas de moyens de fixation directe sur la pièce à usiner. Dans cette variante, le rail longitudinal 1 n'est pas posé sur la pièce P ou en contact avec cette dernière, mais fait partie d'une installation environnante ou « poste de travail ». Le rail longitudinal 1 est alors positionné fixement vis-à-vis de la pièce, par immobilisation de la pièce P par rapport au poste de travail.

La machine-outil ainsi développée permet la réalisation d'opérations automatisées ou semi-automatisées, notamment des opérations d'usinages simples, à la surface d'une pièce de grandes dimensions pouvant être courbe, comme par exemple un élément de fuselage d'aéronef. Un seul rail étant à positionner en tant que référence longitudinale sur la pièce, la machine-outil développée peut être adaptée, selon le mode de réalisation considéré, aux structures présentant une double courbure. Elle est en outre facile à installer, de sorte que, typiquement, un seul opérateur peut suffire à sa mise en oeuvre.

Grâce au montage d'un outil en porte-à-faux, elle permet la réalisation d'opérations dans des zones difficiles d'accès ou de conformation rendant compliquée la réalisation d'opérations. Selon certains modes de réalisation, elle présente plusieurs configurations de montage, c'est-à-dire qu'elle présente outre la configuration de montage avec outil en porte-à-faux, une configuration dans laquelle l'outil est en appui entre le rail et une unité de maintien.

La machine-outil développée est en outre facilement reconfigurable, et peut accueillir de nombreux types d'outils permettant de nombreux types d'usinages, assemblages, ou contrôles.

## Revendications

1. Machine-outil pour la réalisation d'opérations sur une pièce (P) comportant :
• un rail longitudinal (1) configuré pour être positionné vis-à-vis de la pièce ;
• un bras transversal (3), orthogonal au rail longitudinal (1), le bras transversal comportant deux extrémités (31, 32),
• un module de liaison (2) entre le bras transversal et le rail longitudinal (1), ledit module de liaison (2) étant monté en translation sur le rail longitudinal (1) ;
• un outil (4) porté par le bras transversal (3) ;
• au moins une unité de maintien (5) disposée à une extrémité (32) du bras transversal (3) et comportant au moins une ventouse (51) permettant le maintien en position de l'unité de maintien (5) sur la pièce ; le bras transversal (3) comportant des premiers moyens de fixation au module de liaison (2) positionnés entre les deux extrémités (31, 32) du bras transversal (3), les premiers moyens de fixation au module de liaison (2) étant configurés pour fixer l'outil (4) en porte-à-faux vis-à-vis du rail longitudinal (1) de sorte que la machine-outil présente une première configuration de montage dans laquelle l'unité de maintien (5) et l'outil (4) sont respectivement positionnés de part et d'autre du rail longitudinal (1), et **caractérisée en ce que** le bras transversal (3) comporte en outre des deuxièmes moyens de fixation au module de liaison (2) positionnés à l'extrémité du bras transversal (3) opposée à celle où est disposée l'unité de maintien (5), les deuxièmes moyens de fixation au module de liaison (2) étant configurés pour fixer l'outil (4) entre le rail longitudinal (1) et l'unité de maintien (5), de sorte que la machine-outil présente une deuxième configuration de montage dans laquelle l'outil (4) est porté par le bras transversal (3).

2. Machine-outil selon la revendication précédente, dans laquelle l'unité de maintien (5) comporte un système de déplacement adapté à ramper sur la pièce (P), parallèlement au rail longitudinal (1).

3. Machine-outil selon la revendication 2, comportant en outre un dispositif de commande (6), arrangé de sorte à synchroniser le mouvement de l'unité de maintien (5) au mouvement du module de liaison (2) le long du rail longitudinal (1).

4. Machine-outil selon l'une des revendications précédentes, dans laquelle le bras transversal (3) est formé d'un cadre rectangulaire, comportant deux montants transversaux (33) et deux montants longitudinaux (34).

5. Machine-outil selon l'une des revendications précédentes, dans laquelle la liaison entre l'outil (4) et le bras transversal (3) comporte un pivot permettant le réglage de l'orientation de l'outil selon un axe longitudinal, sensiblement parallèle au rail longitudinal.

6. Machine-outil selon l'une des revendications précédentes, dans laquelle la liaison entre l'outil (4) et le bras transversal (3) comporte un pivot permettant le réglage de l'orientation de l'outil selon un axe transversal, sensiblement parallèle au bras transversal (3).

7. Machine-outil selon l'une des revendications précédentes, dans laquelle la liaison entre l'outil (4) et le bras transversal (3) comporte une glissière permettant le réglage de l'outil selon un axe sensiblement orthogonal aux directions longitudinale et transversale.

8. Machine-outil selon l'une des revendications précédentes, comportant en outre un système optique, comportant une caméra (8) et permettant la visualisation et l'analyse d'une zone en regard de l'outil (4).

9. Machine-outil selon l'une quelconque des revendications précédentes, comportant un dispositif choisi parmi : un capteur d'effort sur le bras transversal, un capteur d'effort exercé sur le rail longitudinal (1), un capteur angulaire configuré pour déterminer l'angle entre le bras transversal (3) et le rail longitudinal (1), au moins deux capteurs linéaires positionnés sur le module de liaison (2), au moins deux capteurs linéaires positionnés sur le bras transversal (3).

10. Machine-outil selon l'une quelconque des revendications précédentes, dans laquelle l'unité de maintien (5) et/ou le module de liaison (2) comporte en outre un dispositif de détection de présence orienté selon une direction de déplacement et configuré pour détecter d'un obstacle lors d'un tel déplacement.

11. Machine-outil selon l'une des revendications précédentes, comportant plusieurs contrôleurs (C1...C5), chaque contrôleur étant dédié au pilotage respectif des fonctions d'un élément ou d'un ensemble d'éléments de la machine-outil auquel ledit contrôleur est lié.

12. Machine-outil selon la revendication 11, comportant :
- un premier contrôleur (C1) lié au bras transversal (3) ;
- un deuxième contrôleur lié au support d'outil (41) ;
- un troisième contrôleur lié à l'outil (4).

## Patentansprüche

1. Werkzeugmaschine zur Durchführung von Arbeitsgängen an einem Werkstück (P), welche aufweist:
• eine Längsschiene (1), die dafür ausgelegt ist, gegenüber dem Werkstück positioniert zu werden;
• einen Querarm (3), der zu der Längsschiene (1) orthogonal ist, wobei der Querarm zwei Enden (31, 32) aufweist,
• ein Modul zur Verbindung (2) zwischen dem Querarm und der Längsschiene (1), wobei dieses Verbindungsmodul (2) translatorisch bewegbar auf der Längsschiene (1) angebracht ist,
• ein Werkzeug (4), das von dem Querarm (3) getragen wird,
• wenigstens eine Halteeinheit (5), die an einem Ende (32) des Querarmes (3) angeordnet ist und wenigstens einen Saugnapf (51) aufweist, der das Halten der Halteeinheit (5) in Position auf dem Werkstück ermöglicht;
wobei der Querarm (3) erste Mittel zur Befestigung am Verbindungsmodul (2) aufweist, die zwischen den zwei Enden (31, 32) des Querarmes (3) positioniert sind, wobei die ersten Mittel zur Befestigung am Verbindungsmodul (2) dafür ausgebildet sind, das Werkzeug (4) auskragend gegenüber der Längsschiene (1) zu befestigen, so dass die Werkzeugmaschine eine erste Montagekonfiguration aufweist, in welcher die Halteeinheit (5) und das Werkzeug (4) auf der einen bzw. anderen Seite der Längsschiene (1) positioniert sind,
**dadurch gekennzeichnet, dass** der Querarm (3) außerdem zweite Mittel zur Befestigung am Verbindungsmodul (2) aufweist, die an dem Ende des Querarmes (3) positioniert sind, das demjenigen, wo die Halteeinheit (5) angeordnet ist, gegenüberliegt, wobei die zweiten Mittel zur Befestigung am Verbindungsmodul (2) dafür ausgebildet sind, das Werkzeug (4) zwischen der Längsschiene (1) und der Halteeinheit (5) zu befestigen, so dass die Werkzeugmaschine eine zweite Montagekonfiguration aufweist, in welcher das Werkzeug (4) von dem Querarm (3) getragen wird.

2. Werkzeugmaschine nach dem vorhergehenden Anspruch, wobei die Halteeinheit (5) ein Verschiebungssystem umfasst, das dafür ausgelegt ist, sich auf dem Werkstück (P) parallel zur Längsschiene (1) zu bewegen.

3. Werkzeugmaschine nach Anspruch 2, welche außerdem eine Steuervorrichtung (6) aufweist, die dafür eingerichtet ist, die Bewegung der Halteeinheit (5) mit der Bewegung des Verbindungsmoduls (2) entlang der Längsschiene (1) zu synchronisieren.

4. Werkzeugmaschine nach einem der vorhergehenden Ansprüche, wobei der Querarm (3) von einem rechteckigen Rahmen gebildet wird, der zwei Querstreben (33) und zwei Längsstreben (34) aufweist.

5. Werkzeugmaschine nach einem der vorhergehenden Ansprüche, wobei die Verbindung zwischen dem Werkzeug (4) und dem Querarm (3) einen Drehzapfen aufweist, der die Regelung der Ausrichtung des Werkzeugs entlang einer Längsachse ermöglicht, die im Wesentlichen parallel zu der Längsschiene ist.

6. Werkzeugmaschine nach einem der vorhergehenden Ansprüche, wobei die Verbindung zwischen dem Werkzeug (4) und dem Querarm (3) einen Drehzapfen aufweist, der die Regelung der Ausrichtung des Werkzeugs entlang einer Querachse ermöglicht, die im Wesentlichen parallel zu dem Querarm (3) ist.

7. Werkzeugmaschine nach einem der vorhergehenden Ansprüche, wobei die Verbindung zwischen dem Werkzeug (4) und dem Querarm (3) eine Gleitschiene aufweist, welche die Regelung des Werkzeugs entlang einer Achse ermöglicht, die im Wesentlichen orthogonal zur Längs- und zur Querrichtung ist.

8. Werkzeugmaschine nach einem der vorhergehenden Ansprüche, welche außerdem ein optisches System aufweist, das eine Kamera (8) aufweist und die Visualisierung und die Analyse eines Bereichs gegenüber dem Werkzeug (4) ermöglicht.

9. Werkzeugmaschine nach einem der vorhergehenden Ansprüche, die eine Vorrichtung aufweist, welche ausgewählt ist aus: einem Kraftsensor am Querarm, einem Sensor für die auf die Längsschiene (1) ausgeübte Kraft, einem Winkelsensor, der dafür ausgelegt ist, den Winkel zwischen dem Querarm (3) und der Längsschiene (1) zu bestimmen, wenigstens zwei Linearsensoren, die am Verbindungsmodul (2) positioniert sind, wenigstens zwei Linearsensoren, die am Querarm (3) positioniert sind.

10. Werkzeugmaschine nach einem der vorhergehenden Ansprüche, wobei die Halteeinheit (5) und/oder das Verbindungsmodul (2) außerdem eine Vorrichtung zur Präsenzdetektion aufweisen, die in einer Verschiebungsrichtung ausgerichtet ist und dafür ausgelegt ist, bei einer solchen Verschiebung ein Hindernis zu erkennen.

11. Werkzeugmaschine nach einem der vorhergehenden Ansprüche, welche mehrere Steuereinheiten (C1...C5) aufweist, wobei jede Steuereinheit für die jeweilige Steuerung der Funktionen eines Elements oder einer Anordnung von Elementen, mit dem bzw. mit der die Steuereinheit verbunden ist, bestimmt ist.

12. Werkzeugmaschine nach Anspruch 11, welche aufweist:
- eine erste Steuereinheit (Cl), die mit dem Querarm (3) verbunden ist;
- eine zweite Steuereinheit, die mit dem Werkzeugträger (41) verbunden ist;
- eine dritte Steuereinheit, die mit dem Werkzeug (4) verbunden ist.

## Claims

1. Machine-tool for performing operations of a piece (P), comprising:
• a longitudinal rail (1) configured to be positioned facing the piece;
• a transverse arm (3), orthogonal to the longitudinal rail (1), the transverse arm comprising two ends (31, 32),
• a connection module (2) between the transverse arm and the longitudinal rail (1), said connection module (2) being mounted in translation on the longitudinal rail (1);
• a tool (4) borne by the transverse arm (3);
• at least one holding unit (5) arranged at one end (32) of the transverse arm (3) and comprising at least one suction cup (51) which serves to hold the holding unit (5) in position on the piece;
the transverse arm (3) comprising first means for attachment to the connection module (2), which are positioned between the two ends (31, 32) of the transverse arm (3), the first means for attachment to the connection module (2) being configured so as to attach the tool (4) in a cantilever manner facing the longitudinal rail (1) such that the machine-tool has a first mounting configuration in which the holding unit (5) and the tool (4) are respectively positioned on either side of the longitudinal rail (1), and
**characterized in that** the transverse arm (3) further comprises second means for attachment to the connection module (2), which are positioned at the opposite end of the transverse arm (3) from the end having the holding unit (5), the second means for attachment to the connection module (2) being configured so as to attach the tool (4) between the longitudinal rail (1) and the holding unit (5) such that the machine-tool has a second mounting configuration in which the tool (4) is borne by the transverse arm (3).

2. Machine-tool according to the preceding claim, in which the holding tool (5) comprises a displacement system that is designed to crawl on the piece (P), parallel to the longitudinal rail (1).

3. Machine-tool according to Claim 2, further comprising a control device (6) that is arranged so as to synchronise the movement of the holding unit (5) with the movement of the connection module (2) along the longitudinal rail (1).

4. Machine-tool according to one of the preceding claims, in which the transverse arm (3) consists of a rectangular frame comprising two transverse stanchions (33) and two longitudinal stanchions (34).

5. Machine-tool according to one of the preceding claims, in which the connection between the tool (4) and the transverse arm (3) comprises a pivot which allows the orientation of the tool to be adjusted with respect to a longitudinal axis that is essentially parallel to the longitudinal rail.

6. Machine-tool according to one of the preceding claims, in which the connection between the tool (4) and the transverse arm (3) comprises a pivot which allows the orientation of the tool to be adjusted with respect to a transverse axis that is essentially parallel to the longitudinal transverse arm (3).

7. Machine-tool according to one of the preceding claims, in which the connection between the tool (4) and the transverse arm (3) comprises a slide which allows the tool to be adjusted with respect to an axis that is essentially orthogonal to the longitudinal and transverse directions.

8. Machine-tool according to one of the preceding claims, further comprising an optical system comprising a camera (8) and allowing the visualization and analysis of a region facing the tool (4).

9. Machine-tool according to any one of the preceding claims, comprising a device chosen from among: a force sensor for a force on the transverse arm, a force sensor for a force exerted on the longitudinal rail (1), an angle sensor configured to determine the angle between the transverse arm (3) and the longitudinal rail (1), at least two linear sensors positioned on the connection module (2), at least two linear sensors positioned on the transverse arm (3).

10. Machine-tool according to any one of the preceding claims, in which the holding unit (5) and/or the connection module (2) further comprises a presence detection device oriented according to a displacement direction and configured to detect an obstacle during such a displacement.

11. Machine-tool according to one of the preceding claims, comprising multiple controllers (C1 ... C5), each controller being respectively assigned to control the functions of an element or a set of elements of the machine-tool to which said controller is connected.

12. Machine-tool according Claim 11, comprising:
- a first controller (C1) connected to the transverse arm (3);
- a second controller connected to the tool support (41) ;
- a third controller connected to the tool (4).
